# FASCICULE DE BREVET EUROPEEN

(11) **EP 3 156 866 B1**
(45) Date de publication et mention de la délivrance du brevet: **11.08.2021**
(21) Numéro de dépôt: 16187419.3
(22) Date de dépôt: 06.09.2016
(51) Int. Cl.: G05B 19/418, G06F 9/50, H04L 29/08

(54) **ARCHITECTURE DE COMMANDE INCLUANT UN CONTRÔLEUR LOGIQUE PROGRAMMABLE ET UN SYSTÈME INFORMATIQUE EN NUAGE**
STEUERUNGSARCHITEKTUR, DIE EINE SPEICHERPROGRAMMIERBARE STEUERUNG (SPS) UND EIN CLOUDBASIERTES INFORMATIONSSYSTEM UMFASST
CONTROL ARCHITECTURE INCLUDING A PROGRAMMABLE LOGIC CONTROLLER AND A CLOUD COMPUTING SYSTEM

(30) Priorité: 14.10.2015 FR 1559776
(43) Date de publication de la demande: 19.04.2017
(73) Titulaire: Schneider Electric Industries SAS, 92500 Rueil-Malmaison (FR)
(72) Inventeur: DROUOT, Yves, 06700 Saint Laurent du Var (FR); GORISSE, François, 06250 Mougins (FR)
(74) Mandataire: Mouney, Jérôme

(56) Documents cités:
- US-A1- 2013 211 546
- LANGMANN R ET AL: "Automation services from the cloud", 2014 11TH INTERNATIONAL CONFERENCE ON REMOTE ENGINEERING AND VIRTUAL INSTRUMENTATION (REV), IEEE, 26 février 2014 (2014-02-26), pages 256-261, XP032586303, DOI: 10.1109/REV.2014.6784271
- None

## Description

### Domaine technique de l'invention

La présente invention se rapporte à une architecture de commande employant notamment un contrôleur logique programmable et un système informatique en nuage.

### Etat de la technique

De manière connue, un contrôleur logique programmable (désigné également PLC pour "Programmable Logic Controller" en anglais) est chargé d'exécuter son propre programme d'automatisme de manière à contrôler un ensemble de modules d'entrées/sorties. Le contrôleur logique programmable lit des données captées sur les modules d'entrées et écrit des données sur les modules de sorties. Les modules d'entrée sont par exemple raccordés à des capteurs et les modules de sortie sont par exemple raccordés à des actionneurs.

Actuellement, différentes architectures sont possibles :
- Les modules d'entrées/sorties peuvent être locaux et connectés directement au module unité centrale du contrôleur logique programmable via un bus fond de panier,
- Les modules d'entrées/sorties peuvent être déportés dans des îlots installés au plus près des capteurs et actionneurs et sont connectés au module unité centrale du contrôleur logique programmable à travers des interfaces de communication dédiées.

Cependant, pour certaines applications, ces deux architectures ne sont pas forcément appropriées. C'est par exemple le cas dans des architectures où le capteur connecté à un module d'entrées ou l'actionneur connecté sur un module de sorties n'est pas situé dans un endroit directement accessible. Dans ces applications, il n'est pas toujours aisé de raccorder les modules d'entrées/sorties aux capteurs et/ou actionneurs concernés par l'application.

Une solution qui permette de gérer ces capteurs et/ou actionneurs à l'aide d'un contrôleur logique programmable classique est alors nécessaire.

Par ailleurs, il serait souhaitable de pouvoir facilement configurer une telle application sans avoir à modifier le programme d'automatisme qui est exécuté dans le contrôleur logique programmable.

La demande de brevet US2013/211546A1 décrit par ailleurs l'emploi de dispositifs permettant de conférer une capacité de communication et d'échange avec un système informatique en nuage à des équipements d'automatisme pour que des données générées par les équipements d'automatisme soient rendues disponibles dans le système informatique en nuage, par exemple pour des clients informatiques.

Le but de l'invention est donc de proposer une architecture de commande qui comporte un contrôleur logique programmable qui permette de gérer facilement des capteurs et/ou actionneurs, même si ceux-ci sont situés dans des endroits non directement accessibles et qui puisse facilement commander une application, sans avoir à modifier son programme.

### Exposé de l'invention

Ce but est atteint par une architecture de commande comprenant :
- au moins un contrôleur logique programmable comportant un programme d'automatisme,
- au moins un système informatique en nuage comprenant une adresse accessible à travers un réseau de communication,
- l'application d'automatisme comportant au moins un module de commande agencé pour commander une application en consommant des données d'entrée conformes à un modèle de données d'entrée et en déterminant des données de sortie conformes à un modèle de données de sortie,
- le système informatique en nuage étant agencé pour stocker des premières données conformes au modèle de données d'entrée du module de commande et des deuxièmes données conformes au modèle de données de sortie du module de commande,
- au moins une première entité étant connectée au système informatique en nuage et agencée pour publier lesdites premières données dans le système informatique en nuage en vue d'être lues par le contrôleur logique programmable lorsqu'il exécute le module de commande,
- au moins une deuxième entité étant connectée au système informatique en nuage et agencée pour lire lesdites deuxièmes données publiées dans le système informatique en nuage par le contrôleur logique programmable lorsqu'il exécute ledit module de commande.

Selon une particularité, la première entité est un capteur.

Selon une autre particularité, la première entité est un serveur destiné à publier ses données.

Selon une autre particularité, la deuxième entité est un actionneur.

Selon une autre particularité, la deuxième entité est un serveur mettant à disposition les données lues sur le système informatique en nuage.

Selon une autre particularité, le système informatique en nuage est identifié sur le réseau de communication par une adresse de type IP ou une URL.

Selon une autre particularité, l'architecture de commande fonctionne selon un protocole de type MQTT ou AMQP.

Selon une autre particularité, l'architecture comporte également un système informatique de configuration agencé pour associer chaque donnée d'entrée et chaque donnée de sortie du module de commande à un emplacement de stockage présent dans le système informatique en nuage.

### Brève description des figures

D'autres caractéristiques et avantages vont apparaître dans la description détaillée qui suit faite en regard des dessins annexés dans lesquels :
- la figure 1 représente de manière schématique l'architecture de commande de l'invention,
- la figure 2 illustre de manière schématique un intérêt de l'architecture de l'invention,
- la figure 3 illustre de manière schématique un autre aspect de l'architecture de l'invention.

### Description détaillée d'au moins un mode de réalisation

L'invention vise à proposer une nouvelle architecture de commande incluant notamment un contrôleur logique programmable PLC1 et un système informatique en nuage 100 auquel vient se connecter le contrôleur logique programmable PLC1.

Le contrôleur logique programmable PLC1 comporte au moins un module unité centrale 20 destiné à exécuter un programme d'automatisme et au moins un module de communication 21 comportant une interface de communication adaptée pour se connecter au système informatique en nuage en utilisant un protocole de communication. Sur les figures, le contrôleur logique programmable est représenté avec un ou plusieurs modules d'entrées/sorties 22 connectés à l'unité centrale à travers un bus fond de panier. Ces modules 22 ne rentrent pas dans le cadre de l'invention.

Selon l'invention, le programme d'automatisme peut comporter un ou plusieurs modules de commande MC1, MC2 prédéfinis. Chaque module de commande permet la commande d'une application dédiée, par exemple une application de gestion de vent (MC1), de température ou de luminosité (MC2). Une application de gestion de vent peut consister à mesurer la vitesse du vent et à commander la fermeture d'un ou plusieurs volets roulants selon le niveau de vitesse du vent. L'application de gestion de la luminosité peut consister à commander un lampadaire lorsque la luminosité devient trop faible.

Chaque module de commande prédéfini est ainsi agencé pour consommer des données d'entrée, par exemple des données de vitesse, de niveau de luminosité ou de température et pour déterminer des données de sortie, par exemple des données de commande de volet, de lampadaire ou de climatisation.

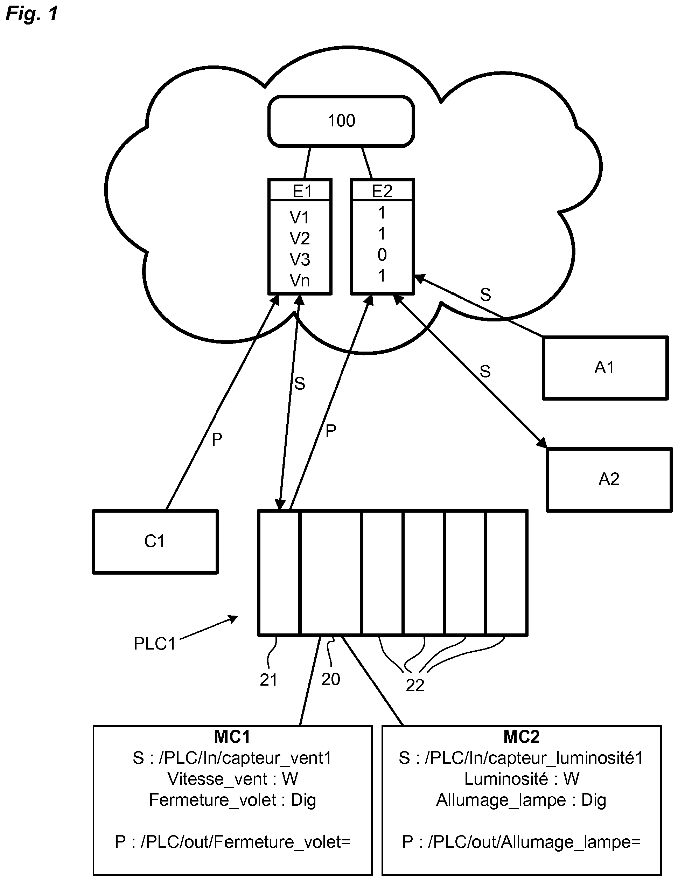

Selon l'invention, les données d'entrée sont définies selon un modèle de données d'entrées et les données de sortie sont définies selon un modèle de données de sortie. Le modèle de données d'entrée comporte au moins le type de variable reconnu pour l'exécution du module de commande prédéfini. Le modèle de données de sortie comporte au moins le type de variable déterminé lors de l'exécution du module de commande prédéfini. Par type de variable, on entend ainsi par exemple le type bouléen, chaîne de caractère, mais aussi la nature numérique ou analogique des données du modèle. Dans les modules MC1, MC2 représentés sur la figure 1, les données d'entrée sont par exemple des chaînes de caractère (W) et les données de sortie sont de type digital (Dig).

Le système informatique en nuage comporte une adresse, par exemple une adresse de type IP (« Internet Protocol »), ou de type URL (« Uniform Ressource Locator ») pour pouvoir communiquer avec le contrôleur logique programmable PLC1, à travers un réseau de communication. La communication du contrôleur logique programmable PLC1 avec le système informatique en nuage 100 est réalisée à travers le module de communication 21 du contrôleur.

Le système informatique en nuage 100 est agencé pour créer des espaces de stockage E1, E2 pour partager des données entre des publicateurs et des souscripteurs (ou consommateurs) de données.

Selon l'invention, l'architecture comporte également un système informatique de configuration (non représenté) agencé pour associer chaque module de commande prédéfini à l'adresse IP du système informatique en nuage 100.

Le système informatique de configuration est également agencé pour associer chaque donnée d'entrée d'un module de commande prédéfini avec un premier emplacement de stockage E1 présent dans le système informatique en nuage 100 et chaque donnée de sortie d'un module de commande prédéfini avec un deuxième emplacement de stockage E2 présent dans le système informatique en nuage 100.

Chaque module de commande MC1, MC2 prédéfini pourra également être configuré en définissant la fréquence d'échange des données à laquelle le contrôleur logique programmable PLC1 publie ses données de sortie dans le deuxième emplacement de stockage du système informatique en nuage 100.

L'architecture de commande comporte également au moins une première entité matérielle et/ou logicielle, par exemple un capteur C1, agencé pour publier des données (V1-Vn - opération de publication désignée par la lettre P sur les figures annexées) dans le système informatique en nuage 100. Selon l'invention, cette première entité matérielle et/ou logicielle est configurée pour publier ces données dans le premier emplacement de stockage E1.

L'architecture de commande comporte également au moins une deuxième entité matérielle et/ou logicielle, par exemple un actionneur A1, agencé pour venir lire des données dans le système informatique en nuage 100. Selon l'invention, cette deuxième entité matérielle et/ou logicielle est configurée pour lire les données publiées dans le deuxième emplacement de stockage E2 (opération de souscription désignée par la lettre S sur les figures annexées).

Selon l'invention, la liaison entre le contrôleur logique programmable PLC1 et le système informatique en nuage 100 peut être réalisée à travers un relais de communication adapté.

De même, la première entité matérielle et/ou logicielle et/ou la deuxième entité matérielle et/ou logicielle peuvent être amenés à communiquer avec le système informatique en nuage 100 à travers un relais de communication adapté. Selon son usage, le relais sera alors configuré pour publier des données ou souscrire à des données présentes dans le système informatique en nuage 100.

Dans la suite de la description, nous prenons l'exemple d'un module de gestion du vent faisant intervenir une première entité matérielle et/ou logicielle de type capteur anémomètre et une deuxième entité matérielle et/ou logicielle de type actionneur de volet roulant sur une fenêtre.

Sur la figure 1, le capteur C1 est agencé pour publier des données (V1-Vn) dans un premier emplacement de stockage E1 du système informatique en nuage 100, défini par le chemin suivant : /*PLC*/*ln*/*capteur_vent1*

L'actionneur A1 est configuré pour souscrire aux données publiées dans un deuxième emplacement de stockage E2 du système informatique en nuage 100, défini par le chemin suivant : /*PLC*/*out*/*fermeture_volet*

Pour l'application de gestion du vent, le contrôleur logique programmable PLC1 comporte un module de commande prédéfini MC1 qui est configuré pour se connecter à l'adresse IP du système informatique en nuage 100 et qui est configuré de manière à :
- souscrire aux données publiées dans le premier emplacement de stockage E1 du système informatique en nuage 100 adressé, en suivant une instruction de souscription (S) aux données localisées par le chemin : /*PLC*/*ln*/*capteur_vent1*
- publier (P) ses données de sortie dans le deuxième emplacement de stockage E2 du système informatique en nuage 100 adressé, en inscrivant la donnée de sortie en suivant le chemin : /*PLC*/*out*/*fermeture_volet*

Lors de l'exécution du module de commande de gestion du vent, le contrôleur logique programmable PLC1 est ainsi amené à lire (S), comme données d'entrée, les données présentes dans le premier emplacement de stockage E1 du système informatique en nuage adressé et à publier (P) ses données de sortie dans le deuxième emplacement de stockage E2 du système informatique en nuage 100 adressé.

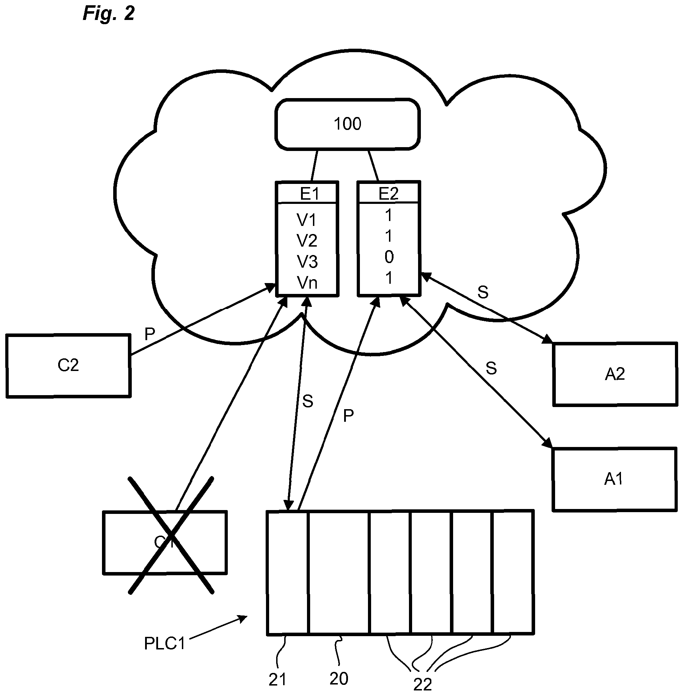

La solution de l'invention permet de décorréler le programme d'automatisme exécuté dans le contrôleur logique programmable PLC1 des capteurs et actionneurs employés. Grâce à l'architecture de l'invention, le contrôleur logique programmable PLC1 exécute le programme d'automatisme sans connaître la provenance de ses données d'entrée, ni la destination de ses données de sortie. Grâce à l'invention, comme représenté sur la figure 2, il est par exemple possible de remplacer un capteur C1 par un autre capteur C2 sans modifier le programme d'automatisme. Pour cela, il suffit de configurer le nouveau capteur C2 pour qu'il publie (P) ses données dans le premier emplacement E1 de stockage du système informatique en nuage. De même, il est par exemple possible d'ajouter des actionneurs à commander. Pour cela, il suffit que chaque nouvel actionneur à commander souscrive aux données publiées dans le deuxième emplacement de stockage du système informatique en nuage.

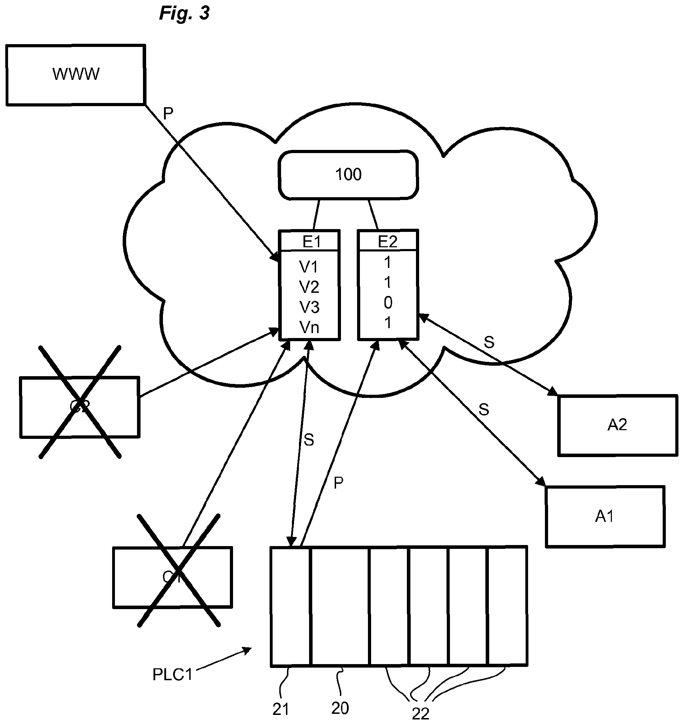

En outre, comme déjà précisé et comme représenté sur la figure 3, la première entité ou la deuxième entité décrite ci-dessus pourra être de type logiciel. Il pourra s'agir par exemple d'un serveur météo (WWW) recueillant des données météos et susceptible de publier certaines de ces données dans le premier emplacement de stockage E1 du système informatique en nuage 100. Dans cette situation, les capteurs C1 et C2 sont remplacés par le serveur météo WWW qui publie ses données dans le système informatique en nuage.

De même, sans apporter une description plus approfondie, l'actionneur A1 et/ou l'actionneur A2 pourrait être remplacé par un autre actionneur ou par un serveur mettant à disposition les données.

Selon l'invention, il est ainsi possible de prévoir plusieurs modules de commande prédéfinis dans le programme d'automatisme et de relier les capteurs et actionneurs associés aux modules de commande à exécuter ultérieurement.

Avantageusement, l'architecture de commande de l'invention pourra être mise en oeuvre en employant un protocole de type MQTT (pour « Message Queuing Telemetry Transport ») ou AMQP (pour « Advanced Message Queuing Protocol »).

Selon l'invention, si aucun capteur physique, ni actionneur physique n'est associé au module de commande exécuté, les données publiées dans le premier emplacement E1 et lues dans le deuxième emplacement E2 pourront l'être par une interface de simulation. Cette interface de simulation pourra par exemple permettre de tester l'architecture et l'exécution du programme d'automatisme.

Par ailleurs, le système informatique en nuage peut comporter un programme pour effectuer des analyses sur les données qui transitent, notamment pour donner accès à des services de maintenance prédictive.

## Revendications

1. Architecture de commande comprenant :
- au moins un contrôleur logique programmable (PLC1) comportant un programme d'automatisme,
- au moins un système informatique en nuage (100) comprenant une adresse accessible à travers un réseau de communication,
- le programme d'automatisme comporte au moins un module de commande (MC1, MC2) agencé pour commander une application en consommant des données d'entrée conformes à un modèle de données d'entrée et en déterminant des données de sortie conformes à un modèle de données de sortie,
**caractérisée en ce que** :
- le système informatique en nuage est agencé pour stocker des premières données conformes au modèle de données d'entrée du module de commande et des deuxièmes données conformes au modèle de données de sortie du module de commande,
- au moins une première entité est connectée au système informatique en nuage (100) et agencée pour publier lesdites premières données dans le système informatique en nuage en vue d'être lues par le contrôleur logique programmable lorsqu'il exécute le module de commande,
- au moins une deuxième entité est connectée au système informatique en nuage et agencée pour lire lesdites deuxièmes données publiées dans le système informatique en nuage par le contrôleur logique programmable lorsqu'il exécute ledit module de commande.

2. Architecture de commande selon la revendication 1, **caractérisée en ce que** la première entité est un capteur (C1).

3. Architecture de commande selon la revendication 1, **caractérisée en ce que** la première entité est un serveur (WWW) destiné à publier ses données.

4. Architecture de commande selon l'une des revendications 1 à 3, **caractérisée en ce que** la deuxième entité est un actionneur (A1).

5. Architecture de commande selon l'une des revendications 1 à 3, **caractérisée en ce que** la deuxième entité est un serveur mettant à disposition les données lues sur le système informatique en nuage (100).

6. Architecture de commande selon l'une des revendications 1 à 5, **caractérisée en ce que** le système informatique en nuage est identifié sur le réseau de communication par une adresse de type IP ou une URL.

7. Architecture de commande selon l'une des revendications 1 à 6, **caractérisée en ce qu'**elle fonctionne selon un protocole de type MQTT ou AMQP.

8. Architecture de commande selon la revendication 1, **caractérisée en ce que** l'architecture comporte aussi un système informatique de configuration agencé pour associer chaque donnée d'entrée et chaque donnée de sortie du module de commande à un emplacement de stockage présent dans le système informatique en nuage (100).

## Patentansprüche

1. Steuerungsarchitektur, umfassend:
- mindestens eine speicherprogrammierbare Steuerung (PLC1), die ein Automatisierungsprogramm enthält,
- mindestens ein cloudbasiertes Informationssystem (100), das eine Adresse umfasst, auf die über ein Kommunikationsnetz zugegriffen werden kann,
- das Automatisierungsprogramm beinhaltet mindestens ein Steuerungsmodul (MC1, MC2), das dazu eingerichtet ist, eine Anwendung zu steuern, indem es Eingangsdaten verbraucht, die einem Eingangsdatenmodell entsprechen, und Ausgangsdaten bestimmt, die einem Ausgangsdatenmodell entsprechen,
**dadurch gekennzeichnet, dass**:
- das cloudbasierte Informationssystem dazu eingerichtet ist, erste Daten, die dem Eingangsdatenmodell des Steuerungsmoduls entsprechen, und zweite Daten, die dem Ausgangsdatenmodell des Steuerungsmoduls entsprechen, zu speichern,
- mindestens eine erste Entität mit dem cloudbasierten Informationssystem (100) verbunden ist und dazu eingerichtet ist, die ersten Daten in dem cloudbasierten Informationssystem zu veröffentlichen, damit sie von der speicherprogrammierbaren Steuerung gelesen werden können, wenn sie das Steuerungsmodul ausführt,
- mindestens eine zweite Entität mit dem cloudbasierten Informationssystem verbunden ist und dazu eingerichtet ist, die zweiten Daten zu lesen, die im cloudbasierten Informationssystem von der speicherprogrammierbaren Steuerung veröffentlicht werden, wenn sie das Steuerungsmodul ausführt.

2. Steuerungsarchitektur nach Anspruch 1, **dadurch gekennzeichnet, dass** die erste Entität ein Sensor (C1) ist.

3. Steuerungsarchitektur nach Anspruch 1, **dadurch gekennzeichnet, dass** die erste Entität ein Server (WWW) ist, der dazu bestimmt ist, seine Daten zu veröffentlichen.

4. Steuerungsarchitektur nach einem der Ansprüche 1 bis 3, **dadurch gekennzeichnet, dass** die zweite Entität ein Aktor (A1) ist.

5. Steuerungsarchitektur nach einem der Ansprüche 1 bis 3, **dadurch gekennzeichnet, dass** die zweite Entität ein Server ist, der die Daten zur Verfügung stellt, die im cloudbasierten Informationssystem (100) gelesen werden.

6. Steuerungsarchitektur nach einem der Ansprüche 1 bis 5, **dadurch gekennzeichnet, dass** das cloudbasierte Informationssystem im Kommunikationssystem durch eine Adresse vom Typ IP oder eine URL identifiziert wird.

7. Steuerungsarchitektur nach einem der Ansprüche 1 bis 6, **dadurch gekennzeichnet, dass** sie nach einem Protokoll vom Typ MQTT oder AMQP arbeitet.

8. Steuerungssystem nach Anspruch 1, **dadurch gekennzeichnet, dass** die Architektur auch ein Konfigurationsinformationssystem beinhaltet, das dazu eingerichtet ist, jedes Eingangsdatenelement und jedes Ausgangsdatenelement des Steuerungsmoduls einem im cloudbasierten Informationssystem (100) vorhandenen Speicherplatz zuzuweisen.

## Claims

1. Control architecture comprising:
- at least one programmable logic controller (PLC1) comprising an automation program,
- at least one cloud computing system (100) comprising an address accessible through a communication network,
- the automation program comprises at least one control module (MC1, MC2) designed to control an application by consuming input data in accordance with a model of input data and by determining output data in accordance with a model of output data,
**characterized in that**:
- the cloud computing system is designed to store first data in accordance with the model of input data of the control module and second data in accordance with the model of output data of the control module,
- at least one first entity is connected to the cloud computing system (100) and designed to publish said first data in the cloud computing system in order to being read by the programmable logic controller when it executes the control module,
- at least one second entity is connected to the cloud computing system and designed to read said second data published in the cloud computing system by the programmable logic controller when it executes said control module.

2. Control architecture according to Claim 1, **characterized in that** the first entity is a sensor (C1).

3. Control architecture according to Claim 1, **characterized in that** the first entity is a server (WWW) intended to publish its data.

4. Control architecture according to one of Claims 1 to 3, **characterized in that** the second entity is an actuator (A1).

5. Control architecture according to one of Claims 1 to 3, **characterized in that** the second entity is a server making available the data read on the cloud computing system (100).

6. Control architecture according to one of Claims 1 to 5, **characterized in that** the cloud computing system is identified on the communication network by an address of IP type or a URL.

7. Control architecture according to one of Claims 1 to 6, **characterized in that** it operates according to a protocol of MQTT or AMQP type.

8. Control architecture according to Claim 1, **characterized in that** the architecture also comprises a configuration computing system designed to associate each input datum and each output datum of the control module with a storage location present in the cloud computing system (100).
